# DEMANDE DE BREVET EUROPEEN

(11) **EP 2 103 819 A1**
(43) Date de publication de la demande: **23.09.2009**
(21) Numéro de dépôt: 09305206.6
(22) Date de dépôt: 05.03.2009
(51) Int. Cl.: F16B 5/02, F16B 37/06

(54) **Intégration d'une cavité**

(30) Priorité: 20.03.2008 FR 0851795
(71) Demandeur: Renault s.a.s., 92100 Boulogne-Billancourt (FR)
(72) Inventeur: Flandin, Michael, 28410, BROUE (FR)

(57) **Abrégé**

Procédé de rénovation d'un fût de perçage.

Ce procédé est remarquable en ce que :
- on forme, sur une partie de la longueur du fût (2a), une empreinte femelle polygonale (2c) ;
- on équipe l'empreinte (2c) d'un écrou (5) destiné à coopérer avec une vis classique (6) de manière à constituer un assemblage ou boulon.

## Description

L'invention se rattache au secteur technique de l'assemblage.

Plus particulièrement, l'invention concerne l'assemblage des pièces diverses dans le domaine de l'automobile, sans pour cela exclure d'autres domaines d'application.

Il est parfaitement connu, pour un homme du métier, de pratiquer, dans l'épaisseur de différents éléments en matériau tendre, notamment en matière plastique, des trous lisses et débouchants également connus sous le nom de fûts d'assemblage.

Ces fûts d'assemblage sont destinés à recevoir des vis du type autotaraudant pour la fixation de pièces quelconques. Les fûts sont réalisés directement lors de la fabrication des éléments, notamment par injection, de sorte que les coûts de fabrication sont particulièrement réduits. En opposition à une vis à pas métrique notamment, une vis autotaraudante est d'un diamètre et de pas de filets plus importants. Il en résulte que le vissage de la vis dans le fût permet de réaliser un autotaraudage de ce dernier. Cette solution n'est cependant pas toujours satisfaisante.

En effet, étant donné que les fûts sont réalisés dans le même matériau que les pièces injectées, par exemple le plastique, il apparaît que la tenue au couple est limitée. Le nombre de démontages est également limité, étant donné qu'ils peuvent, à chaque fois, détériorer le taraudage réalisé, résultant de l'action de vissage. Il en résulte que la vis a tendance à tourner dans le vide, sans prise de couple possible. Bien évidemment, dans ce cas, l'assemblage obtenu n'est plus satisfaisant. Il apparaît donc que cette solution d'assemblage au moyen de vis autotaraudantes engagées dans des fûts lisses, est mal adaptée dans les cas suivants :
- variation importante du couple ;
- vitesse de rotation élevée de certaines visseuses qui peut provoquer un échauffement de la matière ;
- démontages répétés.

L'invention s'est fixée pour but de remédier à ces inconvénients d'une manière simple, sûre, efficace et rationnelle.

A partir de cet état de la technique, le problème que se propose de résoudre l'invention, dans le cas d'un assemblage à partir de fûts lisses destinés à recevoir des vis du type autotaraudant, est de pouvoir, en cas de détérioration des filets résultant de l' autotaraudage, trouver une solution alternative en ayant pour objectif d'obtenir, à nouveau, un assemblage sûr et efficace.

Pour résoudre un tel problème, il a été conçu et mis au point un procédé selon lequel :
- on forme, sur une partie de la longueur du fût, notamment une empreinte femelle polygonale ;
- on équipe l'empreinte d'un écrou destiné à coopérer avec une vis classique de manière à constituer un assemblage ou boulon.

Avantageusement, on forme l'empreinte à l'une des extrémités du fût. On forme l'empreinte dans le fond du fût, considéré à l'opposé de l'introduction de la vis. L'écrou est du type M5 ou M6. L'empreinte est hexagonale.

L'invention concerne également l'élément en matériau tendre soumis aux différentes étapes du procédé et présentant, au moins, un fût destiné à recevoir une vis spécifique du type autotaraudante pour l'assemblage d'une pièce, caractérisé en ce que le ou les fûts présente(nt), à l'opposé de l'introduction de la vis, une empreinte femelle apte à recevoir un écrou destiné à coopérer avec une vis en remplacement de la vis autotaraudante.

L'élément est en matériau plastique et utilisé dans le domaine de l'automobile.

L'invention est exposée ci-après plus en détail à l'aide des figures des dessins annexés dans lesquels :
- la figure 1 est une vue en coupe d'un exemple d'assemblage au moyen d'une vis autotaraudante ;
- la figure 2 est une vue en coupe semblable à la figure 1 montrant la solution issue du procédé selon l'invention pour le remplacement de la vis autotaraudante lorsque le taraudage est devenu défectueux ;
- la figure 3 est une vue partielle en perspective d'un exemple de réalisation d'une pièce avec un fût présentant une empreinte destinée à recevoir un écrou ;
- la figure 4 est une vue correspondant à la figure 3, après mise en place de l'écrou.

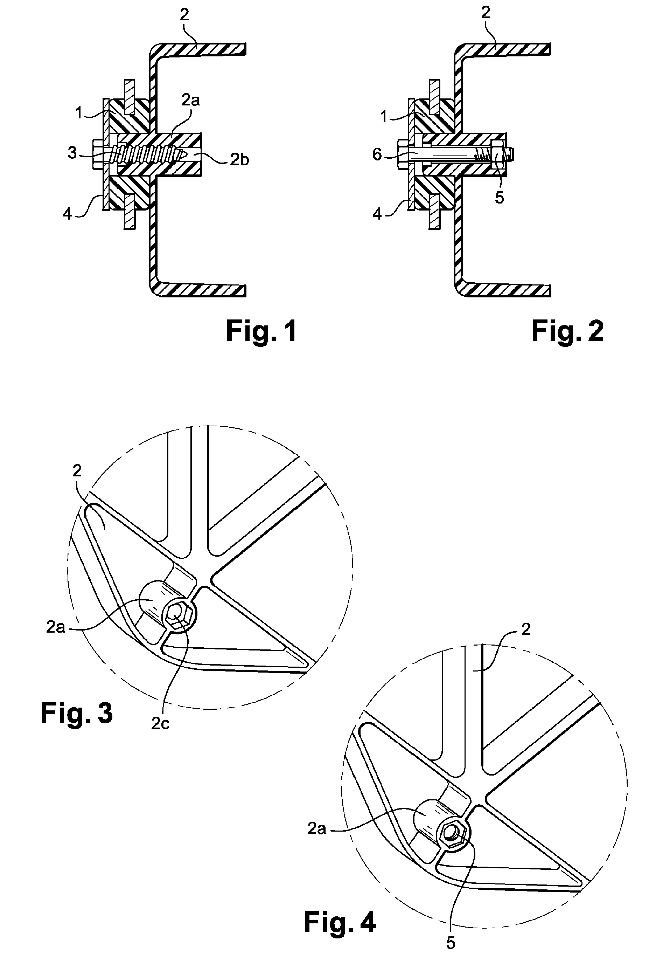

On a illustré, figure 1, la fixation d'une pièce (1) sur un support (2), qui peut être constitué par un élément quelconque, par exemple une façade avant technique dans le domaine automobile. Le support (2) est réalisé dans un matériau tendre, notamment en matière plastique. Ce support (2) présente au moins un fût (2a) percé d'un trou débouchant (2b). L'assemblage de la pièce (1) sur le support (2) est réalisé par une vis autotaraudante (3) vissée dans le fût (2a), en combinaison ou non avec une rondelle d'appui (4). Ce type d'assemblage, comme indiqué, est parfaitement connu pour un homme du métier, et peut donner totalement satisfaction. Toutefois, en cas de vissages répétés de la vis (3), l'autotaraudage du trou (2b) peut devenir défectueux, de sorte que la vis (3) aura tendance à tourner dans le vide.

Dans ce cas, selon le procédé de l'invention, une empreinte polygonale (2c) est formée sur une partie de la longueur du trou (2b) du fût (2a). Avantageusement, cette empreinte (2c) est formée à l'une des extrémités du fût et plus particulièrement dans le fond du fût considéré, à l'opposé de l'introduction de la vis. Cette empreinte (2c) est de section hexagonale pour recevoir un écrou (5) (figures 2 et 4). Il suffit alors de remplacer la vis autotaraudante (3) par une vis du type métrique (6) destinée à être engagée librement dans le trou (2b), préalablement autotaraudé, pour être vissée dans l'écrou (5) positionné dans l'empreinte (2c) (figure 2).

Avantageusement, avant introduction de la vis métrique (6), le trou (2b), préalablement autotaraudé, est repris en diamètre, afin de créer l'augmentation du trou de passage.

Ces caractéristiques permettent d'obtenir une interface fixante à nouveau fonctionnelle.

Les écrous utilisés sont de tout type connu et approprié, par exemple du type M5 ou M6.

On observe que l'écrou (5) est pré-maintenu avant vissage, en étant indexé angulairement dans l'empreinte hexagonale (2c), de sorte qu'il n'est pas nécessaire d'utiliser une clé pour éviter sa rotation lors du serrage. Il en résulte une liberté de mouvement pour l'opérateur.

Les avantages ressortent bien de la description, en particulier on souligne et on rappelle :
- la possibilité d'avoir de nouveau une fixation sure et efficace dans le cas d'un fût où l'autotaraudage n'est plus fonctionnel ;
- les coûts réduits ;
- la simplicité de réalisation.

## Revendications

1. Procédé de rénovation d'un fût (2a) formé dans l'épaisseur d'un élément (2) en matériau tendre et destiné à recevoir une vis spécifique du type autotaraudante pour l'assemblage d'une pièce (1) sur ledit élément (2),
**caractérisé en ce que :**
- on forme, sur une partie de la longueur du fût (2a), une empreinte femelle polygonale (2c) ;
- on équipe l'empreinte (2c) d'un écrou (5) destiné à coopérer avec une vis classique (6) de manière à constituer un assemblage ou boulon.

2. Procédé selon la revendication 1, **caractérisé en ce qu'**on forme l'empreinte (2c) à l'une des extrémités du fût (2a).

3. Procédé selon l'une des revendications 1 et 2, **caractérisé en ce qu'**on forme l'empreinte (2c) dans le fond du fût (2a), considéré à l'opposé de l'introduction de la vis.

4. Procédé selon la revendication 1, **caractérisé en ce que** l'écrou (5) est du type M5 ou M6.

5. Procédé selon la revendication 1, **caractérisé en ce que** la vis (6) d'assemblage est du type métrique.

6. Procédé selon l'une quelconque des revendications 1 à 5, **caractérisé en ce que** l'empreinte (2c) est hexagonale.

7. Elément en matériau tendre présentant, au moins, un fût (2a) destiné à recevoir une vis spécifique (3) du type autotaraudante pour l'assemblage d'une pièce (1), **caractérisé en ce que** le ou les fûts (2a) présente(nt), à l'opposé de l'introduction de la vis, une empreinte femelle (2c) apte à recevoir un écrou (5) destiné à coopérer avec une vis (6) en remplacement de la vis autotaraudante (3).

8. Elément selon la revendication 7, **caractérisé en ce qu'**il est en matériau plastique et utilisé dans le domaine de l'automobile.
